# EUROPEAN PATENT SPECIFICATION

(11) **EP 2 076 696 B1**
(45) Date of publication and mention of the grant of the patent: **28.11.2012**
(21) Application number: 07818552.7
(22) Date of filing: 28.09.2007
(51) Int. Cl.: F16K 5/04, F16K 11/085, F16K 11/076, A61M 39/22

(54) **PRESSURE-RESISTANT 3-WAY STOPCOCK**
DRUCKBESTÄNDIGER 3-WEGE-ABSPERRHAHN
ROBINET 3-VOIES RÉSISTANT À LA PRESSION

(30) Priority: 29.09.2006 US 848339 P
(43) Date of publication of application: 08.07.2009
(73) Proprietor: GE Healthcare BVBA, 1831 Diegem (BE)
(72) Inventor: DE MARCO, Emiliano, B-4431 Loncin (BE)
(74) Representative: Canning, Lewis R.
(86) International application number: PCT/EP2007/008472
(87) International publication number: WO 2008/037494

(56) References cited:
- EP-A- 1 129 682
- WO-A-03/041767
- WO-A-2006/025054
- US-A- 3 185 179
- US-A- 5 443 453

## Description

### Field of the Invention

The present invention is directed to the field of pharmaceutical handling equipment. More specifically, the present invention is directed to a stopcock for a stopcock valve, according to the characteristics of the preamble of independent claim 1.

### Background of the Invention

The art has seen synthesizers for producing radioactive tracers for human injection as used for Positron Emission Tomography (PET), i.e. medical diagnosis through nuclear imaging. The synthesizer use a consumable component, also called a cassette, which mounts to a control unit. The cassette includes all of the chemicals involved in the manufacture of the tracer while the control unit operates the cassette through the opening and closing of valves thereon so as to direct the constituent components through a manufacturing process which produces the tracer as an output. The chemicals within the cassette only come into contact with a disposable fluid path (i.e. the cassette). After each run, the cassette may be replaced with a new cassette to begin a new tracer production cycle. For cassette manufactured by the assignee of the present invention as FastLab™, the basic skeleton of the cassette consists of a manifold of twenty-five 3-way stopcock valves which are sequentially set to provide different flow-paths in fluid communication with the manufacturing order. As the cassette is a consumable is made of an inexpensive plastic material.

The stopcock valves for the cassette must be inexpensive, chemically resistant (towards organics solvents, acids and alkaline solutions), suitable for pharmaceutical applications, resistant to temperatures above 100°C, and resistant to a pressure of 5 bars. The cost criteria and the requirement for a chemically-resistant material suitable for pharmaceutical applications led to a very limited choice of plastic materials. Basically only polypropylene satisfied all these criteria. Polypropylene is a soft material which creeps when submitted to a constraint, such as that experienced by a stopcock valve inserted into the barrel, or stopcock housing, of the manifold.

When the stopcocks are assembled into the barrels, the constraint of the barrels about the stopcock leads to a creep effect, i.e. the dimension and shape of the stopcock changes under the constraint. The result of this creep effect is that the stopcock valves are no longer leak-tight at 5 bars after an accelerated aging simulation by placing the valves into a thermostatic cell at 60°C to simulate 2 year aging within 2 month, even though the valves were leak-tight before the aging simulation.

There are commercially available 3 way-stopcock manifolds.
Most commercially available 3 way-stopcock valves are made of one hard material (for example polysulfone or polycarbonate) for the valve housing and one soft material for the stopcock itself (for example Polyethylene or Polypropylene). The use of a hard material for the stopcock housing prevents creep and dimensional /shape changes under constraint. These valves are resistant to pressure above 5 bars but the material (polysulfone or polycarbonate) is not chemically resistant. There are also few commercial stopcock valves made of polypropylene or polyethylene (soft material) for housing and stopcock. These valves are chemically resistant but do not resist to pressure. According to supplier the pressure resistance is limited to 1-2 bars.

Commercial polysulfone manifolds with polyethylene valves are used on the cassette for the synthesizer marketed by the assignee of the present invention under the tradename TRACERLab MX. Polysulfone, however, is not suitable for FastLab™ as.it is not resistant to some of solvents used therein (e.g. DMSO).

There is therefore a need in the art for a stopcock valve that is both chemically-resistant as well as pressure resistant. Desirably, there is a need for a stopcock valve that is chemically-resistant and able to withstand a pressure of 5 bars.

A cassette for use with the present invention is disclosed in EP 836 609. Another suitable cassette is shown in Figure 11.

The low dead volume stopcock valves were disclosed in commonly assigned United States Patent Publication No. US2005139276.

Stopcock valves representing the closest prior art are known from EP1129682 and U S3 185 179.

### Summary of the Invention

In view of the needs of the prior art, the present invention provides a stopcock for a stopcock valve. The stopcock includes a stopcock body having an elongate cylindrical wall having a cylindrical exterior surface and a cylindrical interior surface. The cylindrical wall defines a first open end and first and second opposed valve ports. The interior surface defines an elongate first cylindrical stopcock cavity in fluid communication with the open end. A bracing wall spans the stopcock cavity and includes at least a first major surface facing the stopcock cavity. The bracing wall defines an open elongate through-passage extending transversely along an off center cord-line across the stopcock body in fluid communication with said first and second valve ports.

### Brief Description of the Drawings

Figure 1 depicts the stopcock of the present invention.
Figure 2 depicts an oblique view of the stopcock of Figure 1.
Figure 3 depicts a cross-sectional view of the stopcock of Figure 1, taken through the line 3-3.
Figure 4 depicts an alternate embodiment of stopcock of the present invention.
Figure 5 depicts yet another embodiment of stopcock of the present invention.
Figure 6 depicts still another embodiment of stopcock of the present invention.
Figure 7 depicts a top elevational view of the stopcock of Figure 1.
Figure 8 is an alternate depiction of the stopcock of the present invention.
Figure 9 is a cross-sectional view of the stopcock of Figure 7, taken through the lines 9-9.
Figure 10 depicts a pair of stopcocks of the present invention, positioned within their respective manifolds, during a test to demonstrate fluid integrity.
Figure 11 depicts a cassette having manifolds for receiving stopcocks of the present invention.
Figures 12A-F depict the operation of a stopcock of the present invention within a manifold.

### Detailed Description of the Preferred Embodiment

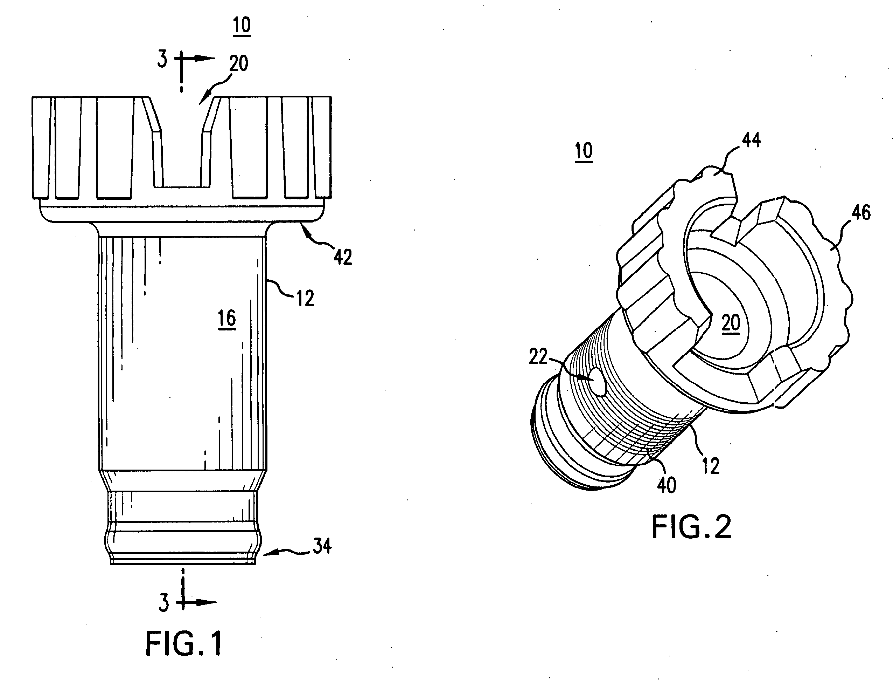

Figure 1 depicts a stopcock 10 of the present invention. Stopcock 10 is desirably formed from relatively soft plastic material, such as polypropylene, which exhibit sufficient chemical resistance to the chemicals with which it will come into contact during operation. Manufacture of stopcock 10 is desirably performed by injection molding. It is further contemplated that stopcock 10 may alternatively be formed from polyethylene and any other relatively soft materials which exhibit the desired chemical resistance and sufficient temperature resistance to deformation which might be experienced during operation. Polyethylene, for example was not chosen for the FastLab™ application due to its lower temperature resistance.

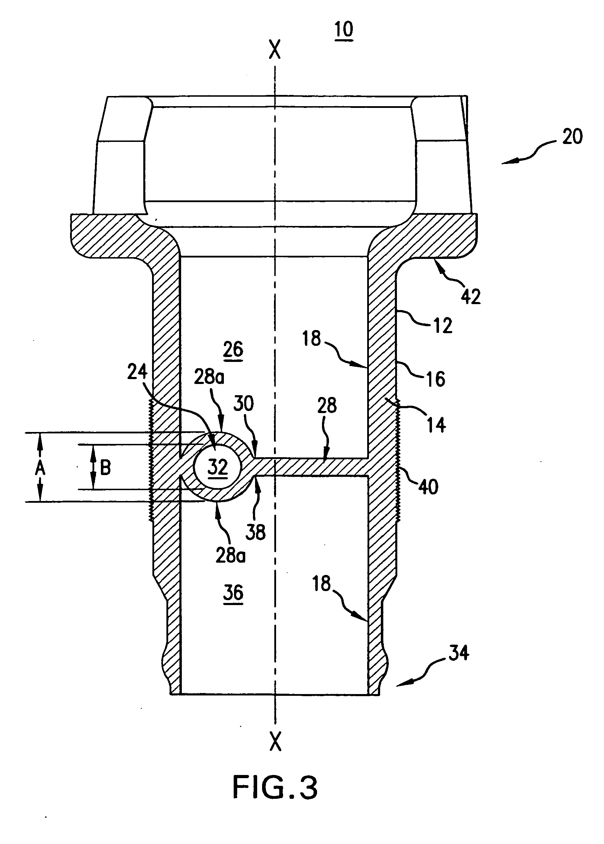

With additional reference to Figures 2, 3, 8 and 9, stopcock 10 includes a stopcock body 12 having an elongate cylindrical wall 14. Cylindrical wall 14 includes a cylindrical exterior surface 16 and a cylindrical interior surface 18. Cylindrical wall 14 also defines a first open end 20 and first and second opposed valve ports 22 and 24, respectively. Interior surface 18 defines an elongate first cylindrical stopcock cavity 26 in fluid communication with open end 20. Bracing wall 28 spans stopcock cavity 26 and includes first major surface 30 facing first stopcock cavity 26. Bracing wall 28 defines open elongate through-passage (or channel) 32 extending therethrough in fluid communication with first and second valve ports 22 and 24. Channel 32 extends transversely along an off-center cord-line, so as not to intersect with the center axis X, through stopcock body 12 so as to minimize the volume of material which will be held therein at any given time. This off-center cord-line is alternatively described as extending adiametrically across cylindrical wall 14. While in the embodiment of Figures 1-3, valve ports 22 and 24 are radially-spaced 120 degrees about the elongate center axis X of stopcock 10, the present invention further contemplates that other non-diametrical spacing of the valve ports may be employed.

As bracing wall 28 and passage 32 is centrally-located along the length of stopcock body 12, cylindrical wall 14 desirably defines a second open end 34 and interior surface 18 defines a second elongate cylindrical stopcock cavity 36 in fluid communication therewith. Bracing wall 28 includes a second major surface 38 facing second stopcock cavity 36. Bracing wall 28 provides a counterbalance to the external constraint from the manifold barrel into which it is inserted and thereby prevents changes in the shape or dimensions of stopcock 10 which result in leaking between the stopcock and manifold during operation.

First and second planar surfaces 30 and 38 extend transversely across first and second stopcock cavities 26 and 36, respectively, so as to be in facing opposition to first and second open ends 20 and 34, respectively of cylindrical wall 14. Through-passage 32 extends along a chord line of cylindrical wall 14. The chord line of passage 32 does not cross the geometric center of the cross-section of cylindrical wall 14, that is, it does not intersect the rotational axis X. It is further contemplated that bracing wall 28 further comprises an arcuate portion 28a extending about through-passage 32. First and second planar surfaces 30 and 38 define a wall thickness therebetween that is smaller in dimension than the maximum transverse span A of arcuate portion 28a. Desirably, first and second planar surfaces 30 and 38 define a wall thickness therebetween that is smaller in dimension than the maximum transverse span B of through-passage 32.

It is further contemplated that cylindrical wall 14 includes a plurality of elongate micro-grooves 40 along exterior surface 16 to either side of said first and second ports 22 and 24. As stopcock body 12 is desirably formed by injection molding, it is contemplated by the present invention that micro-grooves 40 may be formed either by providing the negatives of grooves 40 on the mold tools or by machining micro-grooves 40 onto surface 16 after stopcock body has been removed from the mold. It is further contemplated that the provision of microgrooves 40 onto a stopcock body that has been injection molded is a separate invention of its own right.

Stopcock 10 includes an annular radial flange 42 transversely extending from first open end 20 of cylindrical wall 14. Flange 42 supports a pair of manually-engageable upstanding perimetrical tabs 44 and 46 extending substantially normally thereto. Desirably, tabs 44 and 46 are non-symetrically spaced about the longitudinal axis of the stopcock body so as to provide non-uniform gaps therebetween. The gaps are contemplated to be matingly engaged with an automated stopcock turning mechanism which fills in each of the different-size gaps (ie, keyed to the tabs) so that the stopcock turning mechanism will have predetermined confirmation of the orientation of the stopcock prior to rotating the stopcock within its manifold.

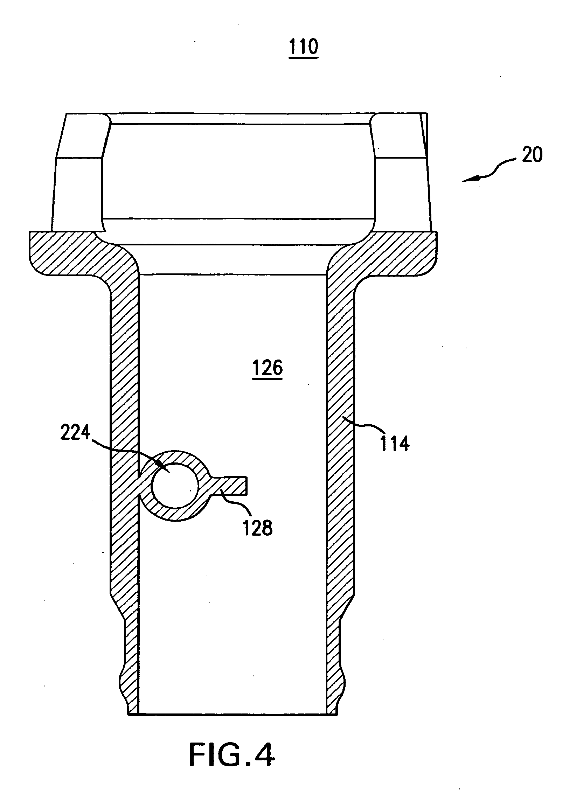

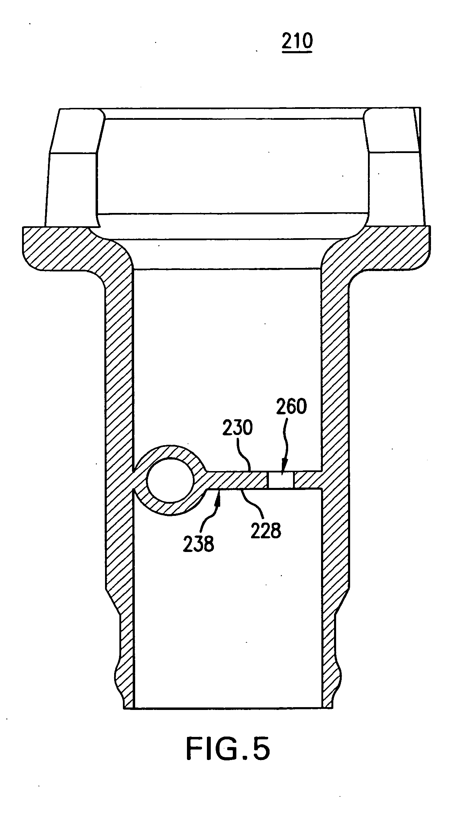

It is further contemplated that bracing wall need not extend fully across so as to fluidly isolate the first and second cavities from each other. As shown in Figure 4, the present invention further contemplates a stopcock 110 having a bracing wall 128 which only spans partway transversely across the first and second cavities 126 and 226 so as to still provide a region of increased rigidity to cylindrical wall 114 about each of ports 222 and 224. Desirably, bracing wall 128 extends across cavity 126 beyond the center point of the cross-section of cylinder 14. Alternatively still, as shown in Figure 5, the present invention contemplates a stopcock 210 having a bracing wall 228 which fully spans across first and second cavities 226 and 236 defines an aperture 260 extending between major surfaces 230 and 238 in fluid communication with cavities 226 and 236.

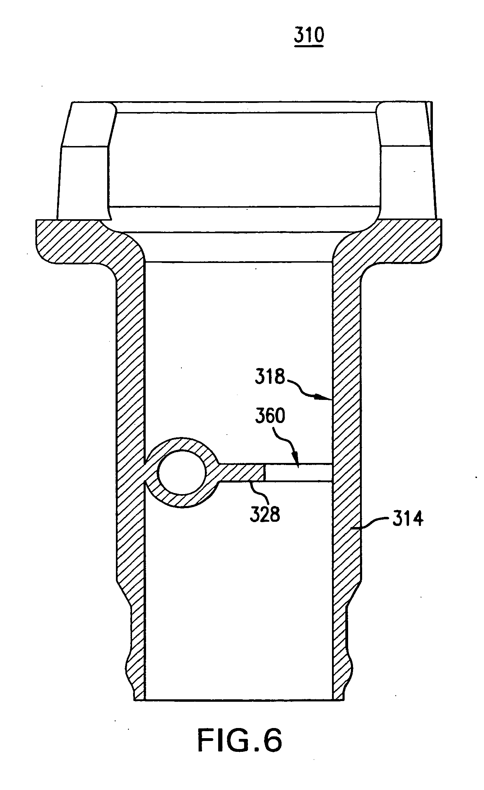

With reference to Figure 6, yet another stopcock 310 of the present invention includes a bracing wall 328 defining an aperture 360 therethrough which opens on a portion of inner surface 318 of cylindrical wall 314. It is further contemplated that the bracing wall of the present invention need not be of uniform thickness, it may, for example provide a cross-sectional shape with upstanding flanges so as to impart a higher bending inertia to the bracing wall for better supporting the ports against the barrel of the manifold.

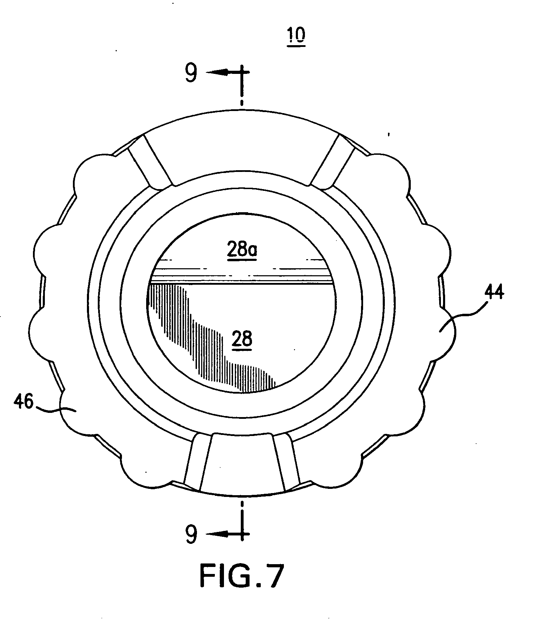

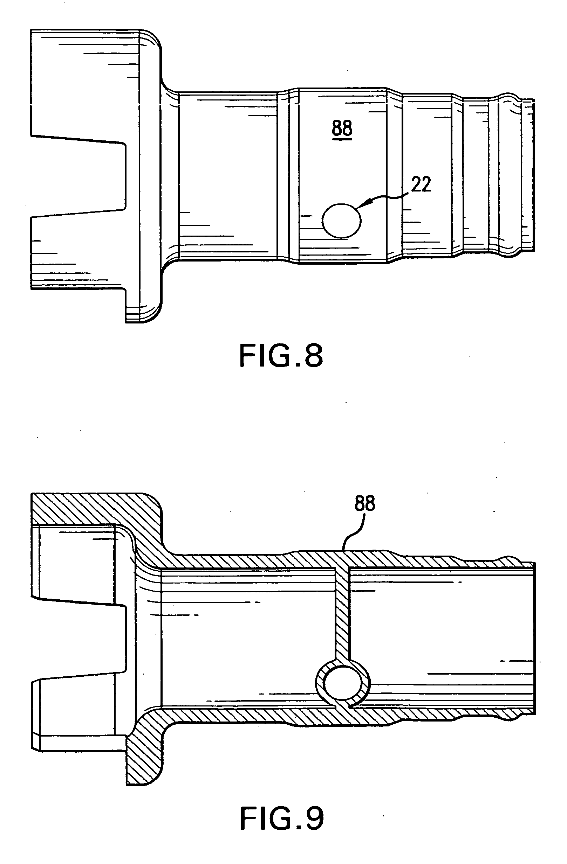

Figures 7-9 depict another stopcock of the present invention which is contemplated to be the same as stopcock 10 except where noted. Figure 9 is a cross-sectional view of the stopcock of Figure 7, taken through the lines 9-9. The stopcock of Figures 7-9 includes region of increased diameter so as to provide a raised surface 88 extending beyond the cylindrical body of the stopcock and provide localized interaction between the stopcock and a manifold about channel 22. Raised surface 88 provides a smaller area of frictional fit with the manifold, yet maintains a sufficient interference fit therewith to maintain fluid integrity about channel 22 and prevent leakage between the stopcocks and manifold.

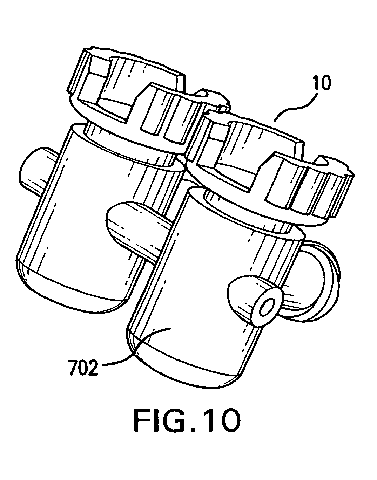

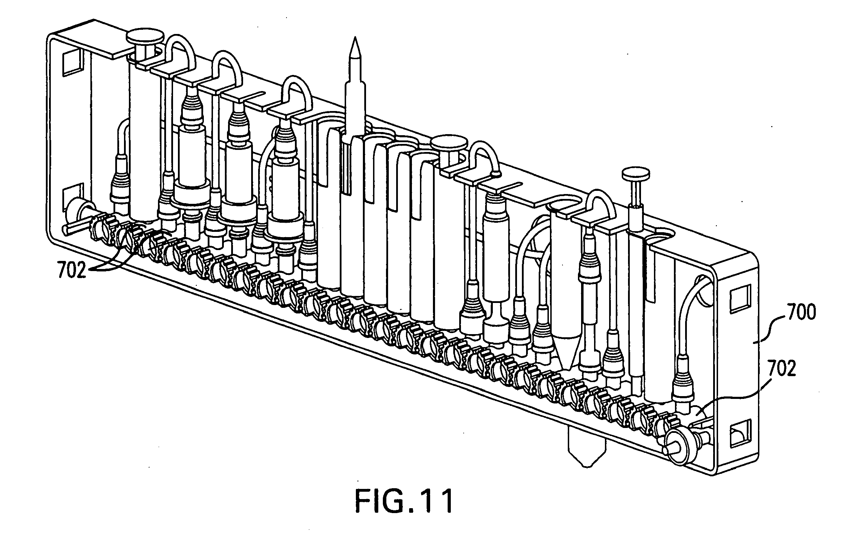

Figure 11 depicts a cassette 700 having a number of manifolds 702 for receiving a stopcock of the present invention. Cassette 700 is desirably formed from the same material used to form the inserted stopcocks. Figure 10 depicts a pair of stopcocks 10 within their manifold 702 isolated from cassette 700.

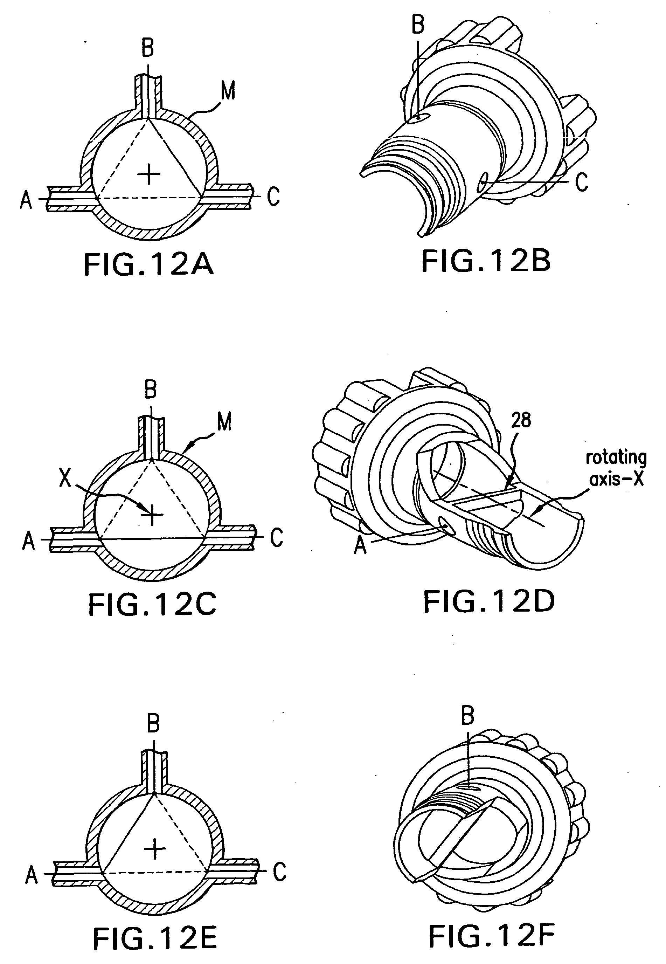

Figures 12A-F further depict a stopcock of the present invention in operation.
As shown in Figure 12A, a manifold M includes a cylindrical wall defining ports A, B, and C. A stopcock of the present invention is fit into manifold M and rotated so as to position fluid channel 32 to be extending in fluid communication between any two of ports A, B, and C of manifold M. Figures 12A, 12C, and 12E depict channel 32 extending in fluid communication between each ports B-C, A-C, A-B, respectively.

Each alignment between ports A, B, and C is achieved by rotating stopcock 10 about axis X. In Figures 12B, 12D, and 12F, the stopcock body is shown in a partial cut-away view so as to reveal bracing wall 28 and better present the orientation of the bracing wall's channel within the stopcock at each orientation.

The present invention therefore provides a stopcock valve design which is both pressure resistant and chemically resistant. The stopcocks of the present invention include a reinforing bracing wall behind the ports on the outer surface of the stopcock, ie, where leak-tightness is required (around the channel through the stopcock). The provision of a bracing wall counter-acts the external constraint from the barrel of the manifold into which it has been inserted and thus prevents changes in the shape and dimensions in the stopcock which result in leakage during operation.

A feasibility study performed on stopcock 10 yielded extremely good results as the stopcocks remained leak-tight at 8 bars after a 12 month accelerated aging simulation. The tested stopcocks, made of polypropylene, were assembled into the manifold of a cassette made of the same grade of polypropylene. These stopcocks exhibited leak-tightness at up to 8 bars after an accelerated aging process simulating 12 month. Without this reinforcement bracing wall of the present invention, leaks are observed already at 1 bar after accelerated aging simulating 6 month, with the same material for stopcock and cassette.

While the particular embodiment of the present invention has been shown and described, it will be obvious to those skilled in the art that changes and modifications may be made without departing from the teachings of the invention. The matter set forth in the foregoing description and accompanying drawings is offered by way of illustration only and not as a limitation. The actual scope of the invention is intended to be defined in the following claims when viewed in their proper perspective based on the prior art.

## Claims

1. A stopcock (10) for a stopcock valve, said stopcock (10) comprising:
A stopcock body (12) having an elongate cylindrical wall (14) having a cylindrical exterior surface (16) and a cylindrical interior surface (18), said cylindrical wall (14) defining a first open end (20) and first and second opposed valve ports (22, 24), said interior surface (18) defining an elongate first cylindrical stopcock cavity (26) in fluid communication with said first open end (20);
a bracing wall (28) spanning said stopcock cavity (26), said bracing wall (28) including at least a first major surface (30) facing said stopcock cavity (26),
**characterized in that** said bracing wall (28) defines an open elongate through-passage (32) extending transversely along an off-center cord-line across said stopcock body (12) in fluid communication with said first and second valve ports (22, 24).

2. The stopcock (10) of claim 1, wherein said cylindrical wall (14) defines a second open end (34) and said interior surface defines a second elongate cylindrical stopcock cavity (36) in fluid communication therewith, said bracing wall (28) including a second major surface (38) in facing opposition to said second stopcock cavity (36).

3. The stopcock of claim 2, wherein said bracing wall (28) includes a planar portion having opposed first and second planar surfaces (30, 38).

4. The stopcock of claim 3, wherein said bracing wall (28) further comprises an arcuate portion (28a), said arcuate portion (28a) extending about said through-passage (32).

5. The stopcock (10) of claim 2, wherein said first and second planar surfaces (30, 38) define a wall thickness therebetween that is smaller in dimension than the maximum transverse span of said through-passage (32).

6. The stopcock (10) of claim 2, wherein said first and second planar surfaces (30, 38) of said bracing wall (28) extend transversely across said first and second stopcock cavity (26, 36) so as to be in facing opposition to said first and second open ends (20, 34) of said cylindrical wall (14).

7. The stopcock (10) of claim 1, wherein said cylindrical wall (14) defines a plurality of elongate micro-grooves (40) along said exterior surface (16) to either side of said first and second ports (22, 24).

8. The stopcock (10) of claim 1, wherein said exterior surface (16) is contoured to define a region of increased diameter along the length thereof which defines said first and second valve ports (22, 24).

9. The stopcock (10) of claim 1, further comprising a radial flange (42) extending from said first open end (20) of said cylindrical wall (14), said flange (42) supporting a first and second upstanding tabs (44, 46) extending substantially normally therefrom.

10. The stopcock (10) of claim 9, wherein said first and second tabs (44, 46) are assymetrically arrayed about the longitudinal axis of said stopcock body (12).

11. The stopcock (10) of claim 1, wherein said bracing wall (28) is centrally-located along the length of stopcock body (12).

12. The stopcock (10) of claim 1, wherein said bracing wall (28) spans fully across said stopcock cavity (26).

13. The stopcock (10) of claim 2, wherein said bracing wall (28) spans partially across said stopcock cavity (26) so that said first and second cavities (26, 36) are in fluid communication with each other.

14. The stopcock (10) of claim 1, wherein said bracing wall (28) is not of uniform thickness.

## Patentansprüche

1. Absperrhahn (10) für ein Absperrhahnventil, wobei der Absperrhahn (10) umfasst:
einen Absperrhahnkörper (12) mit einer länglichen zylindrischen Wand (14), die eine zylindrische Außenfläche (16) und eine zylindrische Innenfläche (18) aufweist, wobei die zylindrische Wand (14) ein erstes offenes Ende (20) sowie eine erste und eine zweite Ventilöffnung (22, 24) begrenzt, die sich gegenüberliegen, wobei die Innenfläche (18) einen länglichen ersten zylindrischen Absperrhahnhohlraum (26) in Fluidkommunikation mit dem ersten offenen Ende (20) begrenzt;
eine Versteifungswand (28), die den Absperrhahnhohlraum (26) durchspannt, wobei die Versteifungswand (28) zumindest eine erste Hauptfläche (30) beinhaltet, die dem Absperrhahnhohlraum (26) zugewandt ist,
**dadurch gekennzeichnet, dass** die Versteifungswand (28) einen offenen länglichen Durchlasskanal (32) definiert, der sich quer entlang einer außermittigen Sehne durch den Absperrhahnkörper (12) in Fluidkommunikation mit der ersten und der zweiten Ventilöffnung (22, 24) erstreckt.

2. Absperrhahn (10) nach Anspruch 1, wobei die zylindrische Wand (14) ein zweites offenes Ende (34) definiert und die Innenfläche einen zweiten länglichen zylindrischen Absperrhahnhohlraum (36) in Fluidkommunikation mit demselben definiert, wobei die Versteifungswand (28) eine zweite Hauptfläche (38) beinhaltet, die dem zweiten Absperrhahnhohlraum (36) zugewandt gegenüberliegt.

3. Absperrhahn nach Anspruch 2, wobei die Versteifungswand (28) einen planen Abschnitt mit einer ersten und einer zweiten planen Fläche (30, 38) beinhaltet, die sich gegenüberliegen.

4. Absperrhahn nach Anspruch 3, wobei die Versteifungswand (28) weiterhin einen bogenförmigen Abschnitt (28a) umfasst, wobei sich der bogenförmige Abschnitt (28a) um den Durchlasskanal (32) erstreckt.

5. Absperrhahn (10) nach Anspruch 2, wobei die erste und die zweite plane Fläche (30, 38) eine Wanddicke zwischen sich definieren, deren Abmessung kleiner ist als die maximale Quererstreckung des Durchlasskanals (32).

6. Absperrhahn (10) nach Anspruch 2, wobei sich die erste und die zweite plane Fläche (30, 38) der Versteifungswand (28) quer durch den ersten und den zweiten Absperrhahnhohlraum (26, 36) erstrecken, so dass sie dem ersten und dem zweiten offenen Ende (20, 34) der zylindrischen Wand (14) zugewandt gegenüberliegen.

7. Absperrhahn (10) nach Anspruch 1, wobei die zylindrische Wand (14) eine Mehrzahl länglicher Mikrorillen (40) entlang der Außenfläche (16) zu beiden Seiten der ersten und der zweiten Öffnung (22, 24) definiert.

8. Absperrhahn (10) nach Anspruch 1, wobei die Außenfläche (16) so profiliert ist, dass sie einen Bereich mit erhöhtem Durchmesser entlang der Länge derselben begrenzt, der die erste und die zweite Ventilöffnung (22, 24) begrenzt.

9. Absperrhahn (10) nach Anspruch 1, der weiterhin einen radialen Flansch (42) umfasst, der sich vom ersten offenen Ende (20) der zylindrischen Wand (14) aus erstreckt, wobei der Flansch (42) einen ersten und einen zweiten aufrechten Vorsprung (44, 46) trägt, die sich im Wesentlichen senkrecht von demselben erstrecken.

10. Absperrhahn (10) nach Anspruch 9, wobei der erste und der zweite Vorsprung (44, 46) asymmetrisch um die Längsachse des Absperrhahnkörpers (12) angeordnet sind.

11. Absperrhahn (10) nach Anspruch 1, wobei die Versteifungswand (28) entlang der Länge des Absperrhahnkörpers (12) zentral angeordnet ist.

12. Absperrhahn (10) nach Anspruch 1, wobei die Versteifungswand (28) den Absperrhahnhohlraum (26) völlig durchspannt.

13. Absperrhahn (10) nach Anspruch 2, wobei die Versteifungswand (28) den Absperrhahnhohlraum (26) teilweise durchspannt, so dass der erste und der zweite Hohlraum (26, 36) in Fluidkommunikation miteinander stehen.

14. Absperrhahn (10) nach Anspruch 1, wobei die Versteifungswand (28) nicht von einheitlicher Dicke ist.

## Revendications

1. Boisseau (10) pour un robinet à boisseau, ledit boisseau (10) comprenant :
un corps de boisseau (12) présentant une paroi cylindrique allongée (14) comportant une surface extérieure cylindrique (16) et une surface intérieure cylindrique (18), ladite paroi cylindrique (14) définissant une première extrémité ouverte (20) et des premier et second orifices de robinet opposés (22, 24), ladite surface intérieure (18) définissant une première cavité de boisseau cylindrique allongée (26) en communication fluidique avec ladite première extrémité ouverte (20) ;
une paroi de renforcement (28) s'étendant sur ladite cavité de boisseau (26), ladite paroi de renforcement (28) comportant au moins une première surface principale (30) faisant face à ladite cavité de boisseau (26), **caractérisé en ce que** ladite paroi de renforcement (28) définit un passage traversant allongé ouvert (32) s'étendant transversalement suivant une ligne de corde excentrée à travers ledit corps de boisseau (12) en communication fluidique avec lesdits premier et second orifices de robinet (22, 24).

2. Boisseau (10) selon la revendication 1, dans lequel ladite paroi cylindrique (14) définit une seconde extrémité ouverte (34) et ladite surface intérieure définit une seconde cavité de boisseau cylindrique allongée (36) en communication fluidique avec celle-ci, ladite paroi de renforcement (28) comportant une seconde surface principale (38) en regard avec ladite seconde cavité de boisseau (36).

3. Boisseau selon la revendication 2, dans lequel ladite paroi de renforcement (28) comporte une partie plane comprenant des première et seconde surfaces planes opposées (30, 38).

4. Boisseau selon la revendication 3, dans lequel ladite paroi de renforcement (28) comprend, en outre, une partie courbe (28a), ladite partie courbe (28a) s'étendant autour dudit passage traversant (32).

5. Boisseau (10) selon la revendication 2, dans lequel lesdites première et seconde surfaces planes (30, 38) définissent une épaisseur de paroi entre elles qui est de dimension inférieure à l'étendue transversale maximum dudit passage traversant (32).

6. Boisseau (10) selon la revendication 2, dans lequel lesdites première et seconde surfaces planes (30, 38) de ladite paroi de renforcement (28) s'étendent transversalement à travers lesdites première et seconde cavités de boisseau (26, 36) de manière à être en regard par rapport à auxdites première et seconde extrémités ouvertes (20, 34) de ladite paroi cylindrique (14).

7. Boisseau (10) selon la revendication 1, dans lequel ladite paroi cylindrique (14) définit une pluralité de micro-rainures allongées (40) le long de ladite surface extérieure (16) de chaque côté desdits premier et second orifices (22, 24).

8. Boisseau (10) selon la revendication 1, dans lequel ladite surface extérieure (16) est profilée de manière à définir une région de diamètre accru suivant sa longueur qui définit lesdits premier et second orifices de robinet (22, 24).

9. Boisseau (10) selon la revendication 1, comprenant, en outre, une collerette radiale (42) s'étendant à partir de ladite première extrémité ouverte (20) de ladite paroi cylindrique (14), ladite collerette (42) supportant des première et seconde pattes verticales (44, 46) s'étendant sensiblement normalement à celle-ci.

10. Boisseau (10) selon la revendication 9, dans lequel lesdites première et seconde pattes (44, 46) sont agencées de manière asymétrique autour de l'axe longitudinal dudit corps de boisseau (12).

11. Boisseau (10) selon la revendication 1, dans lequel ladite paroi de renforcement (28) est positionnée de manière centrale suivant la longueur du corps de boisseau (12).

12. Boisseau (10) selon la revendication 1, dans lequel ladite paroi de renforcement (28) s'étend entièrement à travers ladite cavité de boisseau (26).

13. Boisseau (10) selon la revendication 2, dans lequel ladite paroi de renforcement (28) s'étend partiellement à travers ladite cavité de boisseau (26) de telle sorte que lesdites première et seconde cavités (26, 36) sont en communication fluidique l'une avec l'autre.

14. Boisseau (10) selon la revendication 1, dans lequel ladite paroi de renforcement (28) n'est pas d'épaisseur uniforme.
